# EUROPEAN PATENT APPLICATION

(11) **EP 0 634 305 A1**
(43) Date of publication of application: **18.01.1995**
(21) Application number: 93305475.1
(22) Date of filing: 13.07.1993
(51) Int. Cl.: B60P 7/08

(54) **Strap clasper**

(71) Applicant: YUTAKAMAKE COMPANY LIMITED, Kishiwada-shi, Osaka (JP)
(72) Inventor: Yukimoto, Michiaki, Kishiwada-shi, Osaka (JP)
(74) Representative: Jackson, Peter Arthur

(57) **Abstract**

A strap clasper for fastening a length of strap around a cargo on a freight deck of, for example, a truck or a freight car, which clasper includes a generally elongated buckle (1) having first and second end portions opposite to each other and also having a strap receiving mouth defined in the first end portion thereof. The elongated buckle includes a pair of spaced longitudinal side walls (10) and a bottom wall (11), a strap anchoring unit (3) including a retainer member (31) and an anchoring member (32) both mounted on the first end portion of the elongated buckle so as to straddle between the side walls for holding one of opposite end portions of a strap used to fasten a load, a strap winding unit (2) including a strap winding shaft (20) mounted on the second end portion of the elongated buckle so as to straddle between the side walls for winding the other of the opposite end portions of the strap (V). One end portion of the strap is anchored to the strap anchoring unit (3) by turning around the anchoring member so that respective portions of the strap between the retainer member (31) and the anchoring member (32) and between the anchoring member (32) and the bottom wall (11) of the buckle are firmly clamped. When the operating lever (21) is reciprocately pivoted while the end portion of the strap is anchored, the opposite end portion of the strap is wound up around the strap winding shaft. The strap clasper of the present invention is robust in that, even though the strap clasper is subject to severe vibration, the strap once fastened will not be unnecessarily be loosened, while allowing the length of the strap turned around the cargo to be adjusted.

## Description

### BACKGROUND OF THE INVENTION

### (Field of the Invention)

The present invention relates to a strap clasper for fastening a length of strap or belt used to firmly secure a freight or cargo in position on a vehicle such as, for example, a truck, ship or freight car.

### (Description of the Prior Art)

In transporting a cargo from place to place by means of, for example, a truck, the cargo is firmly fastened to a freight deck of the truck while the strap is encircled around the cargo. A strap clasper is well known and has long been used as an instrument to firmly connect opposite ends of the strap together while a generally intermediate portion of the strap forms a loop around the cargo or, if one of the opposite ends of the strap is bound to a portion of the freight deck, to connect the other of the opposite ends of the strap with a different portion of the freight deck.

The strap clasper is currently available in a number of designs, an example of which is disclosed in, for example, the Japanese Utility Model Publication (Jikkohei) No. 2-23885 published in 1990. The strap clasper disclosed in this publication comprises a generally elongated buckle including a pair of longitudinal side walls and a bottom wall integrating the longitudinal side walls together so as to render the elongated buckle to represent a generally U-shaped cross-section. The elongated buckle also includes an adjustable strap anchor mounted at one end of the elongated buckle for holding, for example, a first end portion of the strap and a strap winder mounted on the opposite end of the elongated buckle for winding a second end portion of the strap opposite to the first end portion thereof.

In this prior art strap clasper, the adjustable strap anchor referred to above includes a first anchoring member around which the first end portion of the strap is turned so as to extend backwardly to allow the first end portion of the strap to overlap an inner portion of the strap adjacent the first end portion thereof thereby to define an overlapped anchor end of the strap, and a second anchoring member engageable with the overlapped anchor end to allow the overlapped anchor end to turn therearound, and a third anchoring member operable to increase the angle of turn of the overlapped anchor end of the strap.

The prior art strap clasper of the design discussed above is used to fasten a cargo in the following manner. The first end portion of the strap is first turned around the first anchoring member until the first end portion of the strap comes to overlap the inner portion of the strap adjacent the first end portion to define that overlapped anchor end with the first end portion positioned below that inner portion of the strap. While in the overlapped anchor end the first end portion of the strap is positioned below the inner portion of the strap, the overlapped anchor end is successively turned around the second anchoring member and then around the third anchoring member and, thereafter, the remaining portion of the strap including the second end portion is pulled to set the overlapped anchor end of the strap in position on the elongated buckle.

The remaining portion of the strap including the second end portion thereof is then turned around a cargo with the second end portion of the strap subsequently wound by the strap winder, thereby to completing a binding of the cargo.

As is well understood by those skilled in the art, the cargo to be fastened on the freight deck of a truck does not always have a smooth surface and this is particularly true where the cargo is composed of a plurality of materials, for example, logs or elongated architectural components. Where the strap clasper is used to tie, for example, elongated architectural components on the freight deck, the strap clasper of the structure described above has been found having a problem in that, when the strap clasper is located in contact with or clear from an irregular surface of the cargo after the strap has been encircled around the cargo, a lose of the shape of the cargo under the influence of an external force such as, for example, vibration induced during the transport often result in a loosening of the fastening force with which the components of the cargo are fastened and, in the worst case it may happen, the components forming the cargo will be collapsed, falling out of the freight deck. Therefore, it has long been an established rule that the strap clasper should not be positioned in contact with or in the vicinity of the irregular surface area of the cargo and, for this purpose, the adjustable anchor has been employed to allow the length of a free end portion of the strap, extending outwardly from the adjustable anchor, to be adjusted thereby to bring the strap clasper to a location clear from the irregular surface area of the cargo.

However, with the prior art strap clasper of the structure described above, the adjustment of the length of that free end portion of the strap is difficult to achieve due to the peculiar structure of the adjustable anchor, requiring time-consuming and laborious procedures. Specifically, where the length of that free end portion of the strap desired to be pulled outwardly of the strap clasper to accomplish the strap adjustment is substantially large, the user is required to push the overlapped anchor end inwardly of the strap clasper to allow a strap loop around the second anchoring member to be loosened so that the loosened strap loop can be taken up by pulling a portion of the strap between the strap clasper and the second end portion thereof outwardly from the strap clasper thereby to move the strap clasper relative to the strap. This is repeated a number of times depending on the length over which the strap is desired to be adjusted. This is indeed complicated and time-consuming.

### SUMMARY OF THE INVENTION

The present invention stems from an attempt to substantially eliminate the inconveniences found in the prior art strap clasper and is intended to provide an improved strap clasper of a type capable of firmly grasping one end of the strap while permitting an efficient and quick adjustment of the length of that portion of the strap which is in effect used to fasten a cargo.

It is also an important object of the present invention to provide an improved strap clasper of the type referred to above wherein the position of the strap winding member necessitated to adjust the length of that portion of the strap used to encircle the cargo can readily and simply be accomplished with no extra tool being required.

Again, it is another important object of the present invention to provide an improved strap clasper of the type referred to above wherein the selective release and fastening of the cargo with the strap can be achieved with a minimized magnitude of an operating force.

In order to accomplish these objects of the present invention, there is provided, in accordance with one aspect of the present invention, a strap clasper which comprises a generally elongated buckle having first and second end portions opposite to each other and also having a strap receiving mouth defined in the first end portion thereof, said elongated buckle including a pair of spaced longitudinal side walls, spaced a predetermined distance from each other, and a bottom wall, a strap anchoring means mounted on the first end portion of the elongated buckle so as to straddle between the side walls for holding one of opposite end portions of a strap used to fasten a load, a strap winding means mounted on the second end portion of the elongated buckle so as to straddle between the side walls for winding the other of the opposite end portions of the strap.

The strap anchoring means referred to above includes a generally elongated anchoring member mounted on the first end portion of the elongated buckle so as to extend between the side walls and for movement in a direction longitudinally of the elongated buckle, and a strap retaining member mounted on the first end portion of the elongated buckle so as to extend between the side walls and positioned on one side of the anchoring member opposite to the bottom wall, said strap retaining member being operable to clamp a portion of the strap situated between the anchoring member and the strap retaining member when, after the first end portion of the strap has been inserted inwardly of the elongated buckle through the strap receiving mouth and turned around the anchoring member so as to extend backwardly towards the strap receiving mouth, the anchoring member is displaced close towards the strap receiving mouth thereby to clamp a portion of the strap between the bottom wall and the anchoring member.

According to the present invention, the first end portion of the strap is inserted inwardly of the elongated buckle through the strap receiving mouth and is then turned around the anchoring member so as to extend outwardly of the elongated buckle through the strap receiving mouth. When one or both of overlapping portions of the strap situated outside the elongated buckle are pulled outwardly, the anchoring member is displaced in a close towards the strap receiving mouth and deep into a bite space defined between the bottom wall and one side edge of the retainer plate adjacent the strap receiving mouth, with a portion of the strap between the strap retaining member and the anchoring member and another portion of the strap between the anchoring member and the bottom wall being consequently firmly clamped therebetween. Therefore, by this wedge effect afforded by the movably supported anchoring member in cooperation with the strap retaining member and the bottom wall, the first end portion of the strap can be firmly anchored to the strap clasper, so firmly that it will neither be separated from the strap clasper nor slackened even though subjected to severe vibrations or impacts. The adjustment of the length of strap used to fasten the cargo can readily be accomplished merely by displacing the anchoring member in a direction away from the strap receiving mouth.

Preferably, the strap retaining member is in the form of a generally elongated rectangular retainer plate having its opposite end portions slidably received within associated longitudinal slots, defined in the side walls so as to incline downwardly towards the strap receiving mouth, for displacement in a direction close towards and away from the strap receiving mouth.

This is particularly advantageous in that, when the anchoring member having the strap turned therearound is displaced close towards the strap receiving mouth in the manner described above, a relatively great clamping force acts between the strap retainer plate and the anchoring member and also between the anchoring member and the bottom wall of the elongated buckle, thereby ensuring a firm retention of the first end portion of the strap.

This is also advantageous in that the displacement of the anchoring member in the direction away from the strap receiving mouth in an attempt to adjust the length of strap actually encircling the cargo can readily be accomplished merely by pulling the first end portion of the strap so as to turn around the strap retainer plate and then pulling it backwardly to cause the strap retainer plate to slide upwardly along the longitudinal slots thereby to provide an increased distance between the strap retainer plate and the anchoring member and also that between the anchoring member and the bottom wall. No extra tool such as a screw driver is needed to accomplish the displacement of the anchoring member away from the strap receiving mouth.

Also preferably, the strap retaining member is employed in the form of a round retainer pin having its longitudinal axis lying generally parallel to the anchoring member. Where the round retainer pin is employed for the strap retaining member, a portion of the strap having been turned around the anchoring member is again turned halfway around the round retainer pin in a sense opposite to that around the anchoring member and, therefore, the strap retaining member need not be supported for movement close towards and away from the strap receiving member such as necessitated when the retainer plate is employed for the strap retaining member. Thus, the use of the round retainer pin renders the strap anchoring means to be simple and compact in structure while ensuring a firm anchoring of the first end portion of the strap.

Preferably, portions of the side walls in the first end portion of the elongated buckle have respective vertical slots defined therein in alignment with each other for slidably receiving opposite ends of the round retainer pin such that the round retainer pin is movable in a direction generally close towards and away from the anchoring member. In such case, a releasable locking means is additionally employed and mounted on at least one of the side walls for movement between lock and release positions so that the round retainer pin can be held in position close to the anchoring member when the releasable locking means is in the lock position, but can be moved away from the anchoring member when the releasable locking means is in the release position, thereby to allow the first end portion of the strap to be loosened.

The use of the releasable locking means in combination with the vertical slots in the side walls is advantageous in that the anchoring of the first end portion of the strap can quickly be released merely by pivoting the releasable locking means from the lock position towards the release position and, therefore, the selective fastening and release of the cargo can be performed easily in a relatively large space.

According to another aspect of the present invention, there is provided a strap clasper which comprises a generally elongated buckle having first and second end portions opposite to each other and also having a strap receiving mouth defined in the first end portion thereof, said elongated buckle including a pair of spaced longitudinal side walls, spaced a predetermined distance from each other, and a bottom wall, a strap anchoring means mounted on the first end portion of the elongated buckle so as to straddle between the side walls for holding one of opposite end portions of a strap used to fasten a load, a strap winding means mounted on the second end portion of the elongated buckle so as to straddle between the side walls for winding the other of the opposite end portions of the strap.

The strap winding means employed in the strap clasper according to the alternative aspect of the present invention includes a rockable operating lever pivotally supported on the second end portion of the elongated buckle for reciprocate movement in first and second angular directions opposite to each other and having a grip defined therein at a location remote from the elongated buckle for the access of an operator's hand thereto, a winding shaft rotatably mounted on the second end portion of the elongated buckle so as to straddle between the side walls, a unidirectional rotor means preferably in the form of at least one ratchet wheel mounted coaxially on the winding shaft for rotation together with the winding shaft in a first direction, but independently of the winding shaft in a second direction opposite to the first direction, a check member mounted on the elongated buckle and engaged with the unidirectional rotor means for preventing the unidirectional rotor means from being rotated in the second direction, but allowing the rotation of the unidirectional rotor means in the first direction, a drive member mounted on the operating lever and engaged with the unidirectional rotor means, and a release member situated in the vicinity of the grip of the operating lever and operatively associated with the drive member for disengaging the drive member from the unidirectional rotor means when said release member is manipulated.

With the strap winding means so constructed as hereinabove described in accordance with the alternative aspect of the present invention, as the operating lever is pivoted in the first angular direction, both of said winding shaft and said unidirectional rotor means are rotated in the first direction to wind up the second end portion of the strap, but, as the operating lever is pivoted in the second angular direction, the operating lever is moved idle while leaving the unidirectional rotor means and the winding shaft substantially immovable. To disengage the check member from the unidirectional rotor means as the operating lever is further pivoted in said first angular direction after the drive member has been disengaged from the unidirectional rotor means as a result of manipulation of the release member, the strap winding means also includes a cam means provided in one end of the operating lever adjacent the strap winding means.

According to the alternative aspect of the present invention, mere application of the finger pressure to the release member while the operator grips the operating lever is sufficient to disengage the drive member from the unidirectional rotor means, that is, the ratchet wheel. When the operating lever is further rotated after the disengagement of the drive member from the unidirectional rotor means, the check member is also disengaged from the unidirectional rotor means, thereby permitting the strap winding member to be rotatable freely. Therefore, once the strap winding member is brought in a freely rotatable position, the second end portion of the strap wound around the strap winding member can be released therefrom as desired.

Thus, according to the alternative aspect of the present invention, no relatively large pulling force Is required to disengage the drive member from the unidirectional rotor means, and the finger pressure is sufficient to accomplish it. Moreover, the releasable member is of a substantially bell-crank structure, it is possible to assuredly disengage the drive member from the unidirectional rotor means, making it possible to enhance the operativity of the strap clasper.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of a strap clasper according to a preferred embodiment of the present invention:
Fig. 2 is a transverse sectional view, on an enlarged scale, of the strap clasper shown in Fig. 1;
Fig. 3 is a longitudinal sectional view, on an enlarged scale, showing one end portion of the strap clasper shown in Fig. 1;
Fig. 4 is a view similar to Fig. 3, showing the strap clasper according to another preferred embodiment of the present invention;
Fig. 5 is a view similar to Fig. 3, showing the strap clasper according to a further preferred embodiment of the present invention;
Fig. 6 is a view similar to Fig. 3, showing the strap clasper according to a still further preferred embodiment of the present invention;
Fig. 7 is a transverse sectional view of the strap clasper shown in Fig. 6;
Fig. 8 is a perspective view of the strap clasper according to a yet further preferred embodiment of the present invention, showing the strap clasper in a condition with a strap being wound up;
Fig. 9 is a perspective view, as viewed from a different angle, of the strap clasper shown in Fig. 8, showing the strap clasper in a condition ready to release the strap;
Fig. 10 is a longitudinal sectional view of the strap clasper shown in Fig. 9; and
Fig. 11 is a top plan view of one end portion of the strap clasper shown in Figs. 8 to 10.

### DETAILED DESCRIPTION OF THE PREFERRED EMBODIMENTS

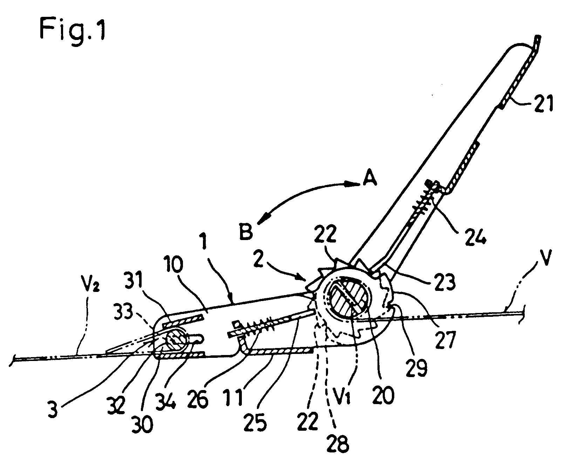

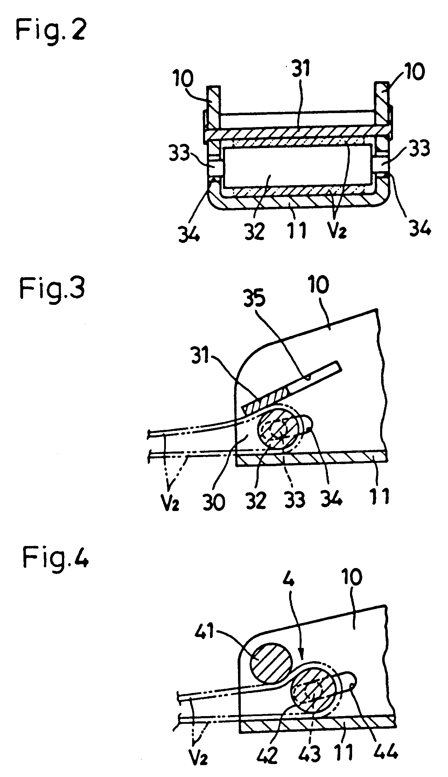

Fig. 1 illustrates a longitudinal sectional view of a strap clasper according to a first preferred embodiment of the present invention and Fig. 2 is a transverse sectional view, on an enlarged scale, of the strap clasper shown in Fig. 1. Referring to these figures, the strap clasper shown therein comprises a generally elongated buckle 1 having first and second end portions opposite to each other and including two longitudinal side walls 10, spaced a predetermined distance from each other, and a bottom wall 11 connecting the side walls 10 together so as to render the elongated buckle 1 to represent a generally U-shaped cross-section. As shown therein, each of the side walls 10 has first and second ends opposite to each other and also has a varying height progressively increasing from the first end thereof towards the second end thereof. A strap winder 2 for winding up one of opposite end portions, e.g., one end portion V1, of a strap V is fixedly mounted on the second end portion of the elongated buckle 1 so as to straddle between the second ends of the side walls 10, and a strap anchor 3 for holding the other end portions V2 of the strap V is similarly fixedly mounted on the first end portion of the elongated buckle 1 so as to straddle between the first ends of the side walls 10.

The strap winder 2 for the strap 3 includes a strap winding shaft 20 in the form of a longitudinally split cylinder journalled at its opposite ends to the side walls 10, a generally U-sectioned operating lever 21 rotatably mounted at one end on the strap winding shaft 20, a pair of ratchet wheels 22 each mounted on one end of the strap winding shaft 20, an elongated drive pawl 23 supported for movement into and out of the operating lever 21 and normally biased by a spring 24 so as to engage the ratchet wheels 22, and a check pawl 25 supported for movement into and out of the elongated buckle 1 and normally biased by a spring 26 so as to engage the ratchet wheels 22 for avoiding a reverse rotation, i.e., a counterclockwise rotation of the ratchet wheels 22 as viewed in Fig. 1.

Reference numeral 27 represents a first cam member formed in the elongated buckle 1, reference numeral 28 represents a second cam member formed in the operating lever 21, and reference numeral 29 represents an engagement recess formed in the elongated buckle 1 for engagement with the drive pawl 23.

The strap anchor 3 mounted on one end portion of the elongated buckle 1 remote from the strap winder 2 includes a generally rectangular retainer plate 31 having its opposite ends secured to the side walls 10 while inclined downwardly towards the bottom wall 11 and towards a strap receiving mouth defined on one side thereof remote from the strap winder 2 leaving a bite space 30 between the bottom wall 11 and one side edge of the retainer plate 31 adjacent the strap receiving mouth, and a strap anchor shaft 32 extending between the side walls 10 while positioned within the bite space 30 in a manner as will be described later, said strap anchor shaft 32 being loosely movable a predetermined distance within the bite space 30 in a direction longitudinally of the elongated buckle 1.

As clearly shown in Fig. 2, the strap anchor shaft 32 has a pair of stud shafts 33 of a length equal to or substantially equal to the thickness of each side wall 10 and formed integrally with the strap anchor shaft 32 so as to extend outwardly therefrom in respective opposite directions and having a diameter smaller than the strap anchor shaft 32. On the other hand, the side walls 10 have respective longitudinal slots 34 defined therein so as to incline downwardly towards the strap receiving mouth, each of said longitudinal slots 34 having a width slightly greater than the diameter of each stud shaft 33. This strap anchor shaft 32 is mounted on the elongated buckle 1 with the stud shafts 33 loosely received within the associated longitudinal slots 34 and is hence movable the predetermined distance determined by the length of each longitudinal slot 34.

The strap clasper according to the first preferred embodiment of the present invention, so designed and so structured as hereinabove described, operates in the following manner. Before the strap V is turned around a cargo (not shown) to bind components of the cargo together, the end portion V2 of the strap V is inserted into the strap receiving mouth. At this time, the end portion V2 of the strap V is first inserted in between the bottom wall 11 of the elongated buckle 1 and the strap anchor shaft 32 so as to extend towards the strap winder 2 and is then turned backwards around the strap anchor shaft 32 while forming a loop. The end portion V2 of the strap V so turned around the strap anchor shaft 32 is then inserted in between the strap anchor shaft 32 and the retainer plate 31, allowing the end portion V2 of the strap V to extend outwardly from the strap receiving mouth. Thereafter, the end portion V2 of the strap V extending outwardly from the strap receiving mouth is pulled to anchor the end portion V2 of the strap to the elongated buckle 1. Thus, the strap anchor shaft 32 provides a wedge effect in cooperation with the retainer plate 31 and the bottom wall 11 of the elongated buckle 1, thereby to firmly lock the end portion V2 of the strap V in position.

As the end portion V2 of the strap V is pulled outwardly, the strap anchor shaft 32 around which the loop of the strap V is formed is drawn towards the strap receiving mouth and into the bite space 30. Since the retainer plate 31 is inclined with the downwardly oriented side edge thereof spaced from the bottom wall 11 a distance smaller than the diameter of the strap anchor shaft 32 while the opposite side edge thereof is spaced from the bottom wall 11 a distance greater than the diameter of the strap anchor shaft 32 plus the double thickness of the strap V, respective portions of the strap situated between the strap anchor shaft 32 and the retainer plate 31 and between the strap anchor shaft 32 and the bottom wall 11 are held immovable when the strap anchor shaft 32 is drawn into the bite space 30 in the manner described above and, hence, the end portion V2 of the strap V is no longer movable relative to the strap anchor shaft 32.

When the end portion V2 of the strap V having been anchored to the elongated buckle 1 in the manner described above, the remaining portion of the strap V including the end portion V1 thereof is turned around the cargo, followed by an insertion of the end portion V1 of the strap V into a longitudinal slit or groove defined in the strap winding shaft 20 to connect it to the strap winding shaft 20. Thereafter, the operating lever 21 is repeatedly rocked about the strap winding shaft 20 in opposite directions shown by the arrows A and B to wind up that end portion V1 of the strap V around the strap winding shaft 20, thereby to tighten the portion of the strap between the strap anchor shaft 32 and the strap winding shaft 20 to firmly bind the components of the cargo together. This is possible because, as the operating lever 21 is pivoted in the direction shown by the arrow A, the drive pawl 23 is engaged in respective tooth grooves between the neighboring teeth of the ratchet wheels 22 and, hence, drives the ratchet wheels 22 in a clockwise direction as viewed in Fig. 1 while the check pawl 25 successively rides over teeth of the ratchet wheels 22, thereby pulling the strap V close towards the strap winding shaft 20 to turn the end portion V1 of the strap V around the strap winding shaft 20. On the other hand, as the operating lever 21 is pivoted in the direction shown by the arrow B, the drive pawl 23 successively ride over the teeth of the ratchet wheels 22 while the check pawl 25 is in position to avoid the reverse, counterclockwise rotation of the ratchet wheels 22.

To release the cargo so fastened by the strap clasper of the present invention, the drive pawl 23 has to be displaced against the spring 24 so as to disengage from the ratchet wheels 22, followed by the rotation of the operating lever 21 in the clockwise direction as shown by the arrow A thereby to allow the drive pawl 23 to be engaged in the engagement recess 29 having slid over the first cam member 27. Continued turn of the operating lever 21 after the drive pawl 23 has been engaged in the engagement recess 29 results in the second cam member 28 to displace the check pawl 25 against the spring 26 with the check pawl 25 consequently disengaged from the ratchet wheels 22, thereby allowing the strap winding shaft 20 to rotate in the reverse direction. Thereafter, as the strap A is pulled outwardly with respect to the strap winding shaft 20, the end portion V1 of the strap V can be released from the strap winding shaft 20.

While the strap clasper of the present invention operates in the above described manner, if the strap clasper used to fasten the cargo is positioned at an irregular surface area of the cargo or at a level higher than the operator or user of the strap clasper, all that is required is to change the position of the loop of the strap around the strap anchor shaft 32. This can be accomplished by forcibly displacing the strap anchor shaft 20 backwardly and in a direction away from the strap receiving mouth to release the wedge effect temporarily, thereby allow the end portion V2 of the strap V to be freely displaced relative to the strap anchor shaft 32. In this way, the position of the strap clasper relative to the cargo can be changed as desired. It is, however, to be noted that, once the wedge effect is released, that portion of the strap V around the cargo may be slackened and this can be accommodated by further turning the operating lever 21 so as to wind up the strap V. It is also to be noted that the displacement of the strap anchor shaft 21 to accomplish the temporary release of the wedge effect can be achieved by, for example, hammering the strap anchor shaft 21 so as to displace backwardly. Alternatively, a suitable lockable release lever may be employed as mounted operatively on the elongated buckle 1 for adjusting the position of the strap anchor shaft 21 when the necessity occurs.

For the strap winder 2, any structure other than that described above, for example, a toggle mechanism or a cam buckle mechanism may be employed if desired.

Although in the foregoing embodiment reference has been made to the use of the generally rectangular retainer plate 31 supported fixedly between the side walls 10, it may be supported for movement along an inclined path as shown in Fig. 3. Referring now to Fig. 3 showing a second embodiment of the present invention, the side walls 10 have respective inclined slots 35 defined therein so as to incline downwardly towards the strap receiving mouth with opposite ends of the rectangular retainer plate 31 slidably and non-detachably received within the inclined slots 35.

According to the second embodiment shown in Fig. 3, the temporary release of the wedge effect can readily be accomplished by merely pulling the end portion V2 of the strap V, then extending outwardly from the elongated buckle 1, so as to turn around the retained plate 31 in the vicinity of the strap receiving mouth and then further pulling that end portion V2 of the strap V in a direction close towards the operating lever 21 thereby allowing the retainer place 31 to displace backwardly along the slots 35. This does not require any hammering or the use of the lockable release lever such as required in the strap clasper according to the foregoing embodiment of the present invention.

Also, in place of the generally rectangular retainer plate 31 shown in any one of Figs. 1 and 2 and Fig. 3, a round retainer pin 41 may be employed in the following third embodiment of the present invention as shown in Fig. 4.

More specifically, according to the third embodiment shown in Fig. 4, the strap anchor 4 includes a pair of longitudinal slots 44 defined in the respective side walls 10 so as to incline downwardly towards the strap receiving mouth, and a strap anchor shaft 42 having its opposite ends formed integrally with stud shafts 43 protruding therefrom in the opposite directions away from each other and movably mounted on the elongated buckle 1 with the stud shafts 43 received within the longitudinal slots 44. The retainer pin 41 is mounted on the elongated buckle 1 with its opposite ends rigidly secured to the side walls 10, and is positioned inclinedly above and on one side of the strap anchor shaft 42 adjacent the strap receiving mouth so that a portion of the strap V between the strap anchor shaft 42 and the retainer pin 41 can be firmly clamped therebetween when the strap anchor shaft 42 is displaced close towards the strap receiving mouth in a manner similar to that described in connection with the strap anchor shaft 42 in the foregoing embodiment.

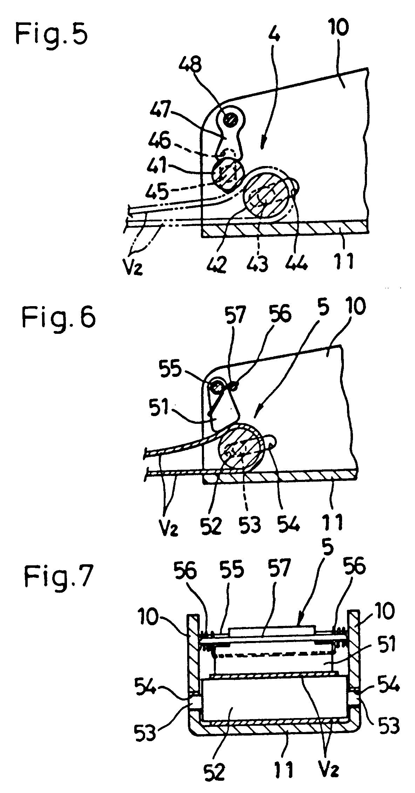

Although in the third embodiment shown in Fig. 4 the retainer pin 41 has been described as fixedly secured at its opposite ends to the side walls 10, it may be supported for movement up and down in a direction generally perpendicular to the bottom wall 11. This will now be described with particular reference to Fig. 5.

As shown in Fig. 5, the retainer pin 41 has its opposite ends formed integrally with stud shafts 45 extending coaxially therefrom in the opposite directions away from each other and is mounted on the elongated buckle 1 with the stud shafts 45 movably received within respective vertical slots 46 defined in the side walls 10. The side walls 10 carry generally elongated lock plates 47 pivotally secured thereto by means of associated pivot pins 48 so as to be oriented downwardly as shown and positioned immediately above the vertical slots 46. The lock plates 47 are so designed and so sized that, so long as they are oriented downwardly, the retainer pin 41 is held immovable, but rotatable about their two axes, that is, does not move along the vertical slots.

According to the fourth embodiment shown in Fig. 5, when the end portion V2 of the strap V is desired to be anchored and, also, when the wedge effect is desired to be released to adjust the position of the strap clasper relative to the cargo, the lock plates 47 are swayed aside about the pivot pins 48 to permit an up and down movement of the retainer pin 41.

Figs. 6 and 7 illustrates a fifth preferred embodiment of the present invention in which the strap anchor 5 includes longitudinal slots 54 defined in the respective side walls 10 in a manner similar to the longitudinal slots 44 shown in Fig. 5, and a strap anchor shaft 52 integrally formed at its opposite ends with stud shafts 53 and mounted on the elongated buckle 1 with the stud shafts 53 movably received within the longitudinal slots 54. The strap anchor 5 shown therein also includes a pivotable retainer block 51 pivotally supported at its opposite ends by the side walls 10 by means of a support shaft 55 for movement between operative and release positions, said pivotable retainer block 51 being normally biased counterclockwise, as viewed in Fig. 6, towards the operative position by means of one or more wire springs, for example, a pair of wire springs 56. With the pivotable retainer block 51 normally biased by the wire springs 56, the pivotable retainer block 51 is held in abutment with a stopper 57.

In this structure of the strap anchor 5 shown in Figs. 6 and 7, when the end portion V2 of the strap V is desired to be anchored, the pivotable retainer block 51 biased by the wire springs 56 towards the operative position bites that portion of the strap V between it and the strap anchor shaft 52 thereby holding the end portion V2 of the strap V immovable. At this time, a portion of the strap V between the strap anchor shaft 52 and the bottom wall 11 of the elongated buckle 1 is also clamped therebetween consequent upon movement of the strap anchor shaft 52 close towards the strap receiving mouth that has taken place in a manner similar to that described in detail in connection with the first embodiment of the present invention.

On the other hand, when the wedge effect is desired to be released to adjust the position of the strap clasper relative to the cargo, the end portion V2 of the strap V extending outwardly from the strap receiving mouth is pulled in a direction away from the elongated buckle 1 a slight distance sufficient to cause the pivotable retainer block 51 to pivot about the support shaft 55 towards the release position against the wire springs 56, allowing that end portion V2 of the strap V to be pulled inwardly of the elongated buckle 1 by the effect of a tension acting on the portion of the strap V encircled around the cargo.

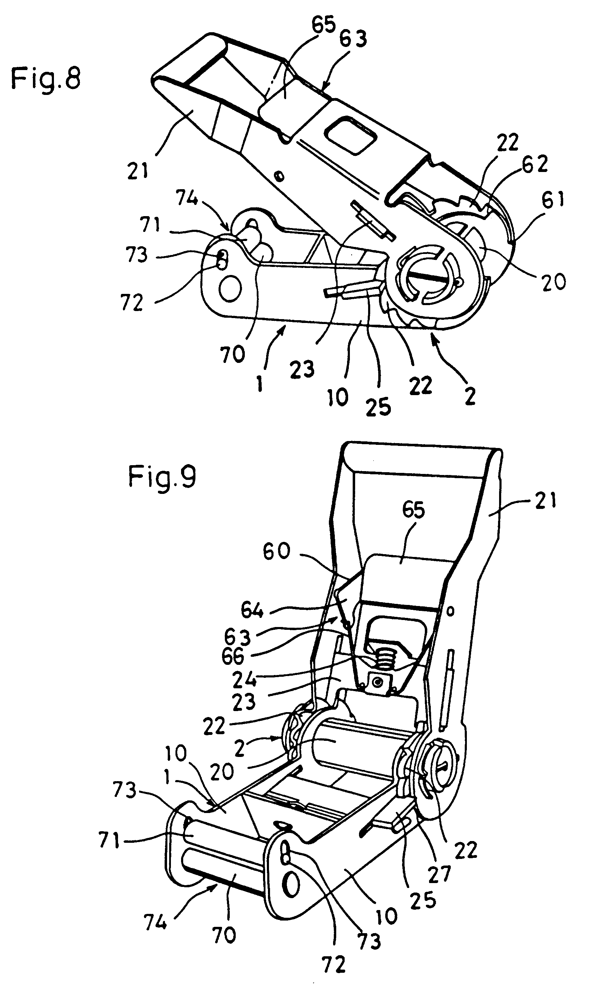

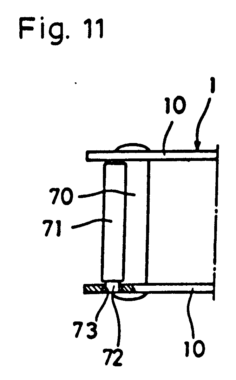

Referring now to Figs. 8 to 11 showing the strap clasper according to a sixth preferred embodiment of the present invention, the strap clasper shown therein comprises a generally elongated buckle 1 having first and second end portions opposite to each other and including a pair of longitudinal side walls 10, spaced a predetermined distance from each other, and a bottom wall 11 connecting the side walls 10 together so as to render the elongated buckle 1 to represent a generally U-shaped cross-section. As shown therein, each of the side walls 10 has first and second ends opposite to each other and also has a varying height progressively increasing from the first end thereof towards the second end thereof.

The strap clasper also comprises a strap winder 2 for winding up one of opposite end portions, e.g., one end portion V1, of a strap V, a strap release mechanism 63 for releasing the strap which has been wound up by the strap winder 2 and a strap anchor mechanism 74 for holding the other end portions V2 of the strap V. The strap winder 2 is fixedly mounted on the second end portion of the elongated buckle 1 so as to straddle between the second ends of the side walls 10, and the strap anchor mechanism 64 is similarly fixedly mounted on the first end portion of the elongated buckle 1 so as to straddle between the first ends of the side walls 10.

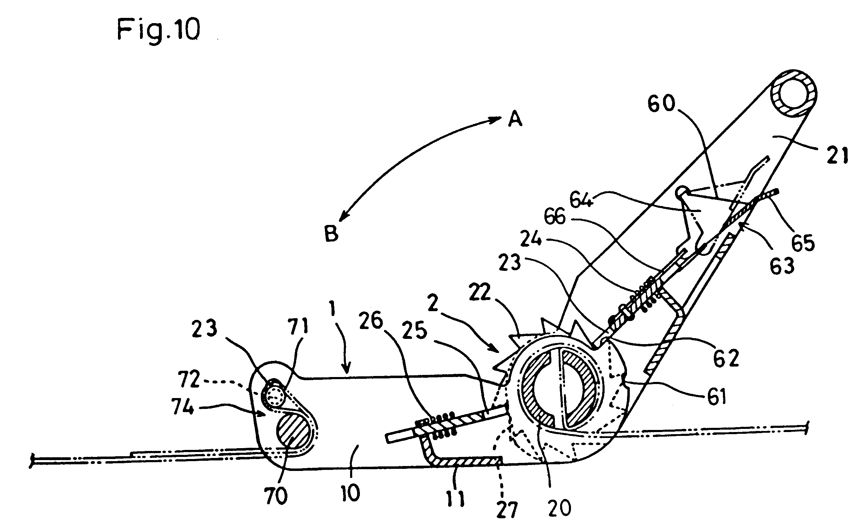

Respective end edges of the side walls 10 adjacent the strap winder 2 are formed with associated stop faces 62 and 63 engageable with the drive pawl 23 and defining the stroke of pivotal movement of the operating lever 21 and also with associated engagement recesses 61 engageable with the drive pawl 23. as best shown in Fig. 10.

The strap winder 2 for the strap 3 includes a strap winding shaft 20 in the form of a longitudinally split cylinder journalled at its opposite ends to the side walls 10, a generally U-sectioned operating lever 21 rotatably mounted at one end on the strap winding shaft 20, a pair of ratchet wheels 22 each mounted on one end of the strap winding shaft 20 for rotation together therewith, an elongated drive pawl 23 supported for movement into and out of the operating lever 21 and normally biased by a spring 24 so as to engage the ratchet wheels 22, and a check pawl 25 supported for movement into and out of the elongated buckle 1 and normally biased by a spring 26 so as to engage the ratchet wheels 22 for avoiding a reverse rotation, i.e., a counterclockwise rotation of the ratchet wheels 22 as viewed in Fig. 10.

Reference numeral 27 represents a cam member integrally formed with an end face of the operating lever 21 and operable to retract the check pawl 25 against the biasing force of the spring 26.

The strap release mechanism 63 comprises a rocking member 60 pivotally supported within a generally U-shaped space defined in the operating lever 21. This rocking member 60 may be of one-piece construction including a pair of generally triangular support plates 64 opposite to each other within the U-shaped space of the operating lever 21 and a presser plate 65 connecting respective base edges of the triangular support plates 64 together. This rocking member 60 is carried by the operating lever 21 with the triangular support plates 64 movably situated within the U-shaped space in the operating lever 21 and with the presser plate 65 exposed to the outside of the operating lever 21 as best shown in Figs. 8 and 10, said triangular support plates 64 being in turn connected with the drive pawl 23 by means of rigid connecting wires 66.

The strap anchor mechanism 74 mounted on one end portion of the elongated buckle 1 remote from the strap winder 2 includes a fixed anchor shaft 70 having its opposite ends secured to the side walls 10, and a movable anchor shaft 71 having its opposite ends formed integrally with stud shafts 72. The movable anchor shaft 71 is mounted on the elongated buckle 1 so as to extend substantially parallel to the fixed anchor shaft 70 with the stud shafts 72 slidably received within associated vertical slots 73 defined in the side walls 10. Thus, the movable anchor shaft 71 is movable close towards and away from the fixed anchor shaft 70 with the stud shaft 72 guided in and along the associated vertical slots 73.

The strap clasper according to the sixth preferred embodiment of the present invention, so designed and so structured as hereinabove described and shown in Figs. 8 to 11, operates in the manner which will now be discussed. Before the strap V is turned around a cargo (not shown) to bind components of the cargo together, the end portion V2 of the strap V is inserted into the strap receiving mouth. At this time, the end portion V2 of the strap V is first inserted in between the bottom wall 11 of the elongated buckle 1 and the fixed anchor shaft 70 so as to extend towards the strap winder 2 and is then turned backwards around the fixed anchor shaft 70 and also around the fixed retainer rod 71 while forming a loop around the fixed retainer rod 71. The end portion V2 of the strap V so turned successively around the movable anchor shaft 70 and then around the fixed retainer rod 71 is then inserted in between the movable anchor shaft 71 and the fixed anchor shaft 70 so as to be again turned around the movable anchor shaft 71, extending between the movable anchor shaft 70 and that portion of the strap which has been turned around the movable anchor shaft 70 so as to extend towards the fixed retainer rod 71, finally emerging outwardly from the strap receiving mouth. Thus, the end portion V2 of the strap V is folded backwardly around the movable anchor shaft 71, forming a strap overlap at which a frictional resistance is developed between overlapping portions of the strap V forming the strap overlap to resist against a relative movement between these overlapping portions of the strap V. The higher the tension under which the remaining portion of the strap V between the end portions V1 and V2 of the strap, the higher the frictional resistance, and therefore, the possibility of the strap V being unnecessarily slackened can advantageously be eliminated.

After the end portion V2 of the strap V has been anchored to the elongated buckle 1 in the manner described above, the remaining portion of the strap V including the end portion V1 thereof is turned around the cargo, followed by an insertion of the end portion V1 of the strap V into a longitudinal slit or groove defined in the strap winding shaft 20 to connect it to the strap winding shaft 20. Where the portion of the strap extending outwardly of the strap clasper between the strap anchor mechanism 74 and the strap winder 2 is relatively lengthy for the perimeter of the cargo to be fastened, the strap V has to be pulled close towards the strap winder 2 to tighten that portion of the strap V around the cargo, or where it is relatively short for the perimeter of the cargo to be fastened, that portion of the strap V around the cargo should be pulled close towards the strap anchor mechanism 74 to allow the end portion V2 of the strap V that extend outwardly from the strap clasper to be drawn inwardly thereby to lengthen that portion of the strap V around the cargo. Thus, it will readily be understood that the effective length of that portion of the strap V used to turn around the cargo to fasten the latter can be adjusted.

After the end portion V1 of the strap V has been engaged to the winding shaft 20 in the manner described above, the operating lever 21 is repeatedly rocked about the strap winding shaft 20 in opposite directions shown by the arrows A and B to wind up that end portion V1 of the strap V around the strap winding shaft 20, thereby to tighten the portion of the strap between the fixed anchor shaft 70 and the strap winding shaft 20 to firmly bind the components of the cargo together. This is possible because, as the operating lever 21 is pivoted in the direction shown by the arrow B, the drive pawl 23 slides over teeth of the ratchet wheels 22 while the check pawl 25 is engaged with teeth of the ratchet wheels 22 to held the winding shaft 20 immovable, permitting the operating handle 21 to pivot idle. On the other hand, as the operating lever 21 is pivoted in the direction shown by the arrow A, the drive pawl 23 is engaged in respective tooth grooves between the neighboring teeth of the ratchet wheels 22 and, hence, drives the ratchet wheels 22 in a clockwise direction as viewed in Fig. 10 while the check pawl 25 successively rides over teeth of the ratchet wheels 22, thereby pulling the strap V close towards the strap winding shaft 20 to turn the end portion V1 of the strap V around the strap winding shaft 20.

To release the cargo so fastened by the strap clasper of the present invention, all that is necessary is to apply a finger pressure to the presser plate 65 of the rocking member 60. More specifically, when the finger pressure is applied to the presser plate 65, the rocking member 60 is pivoted from a position, shown by the solid line, towards a position shown by the phantom line in Fig. 10, causing the rigid connecting wires 10 to pull the drive pawl 23 in a direction required for the drive pawl 23 to disengage from the teeth of the ratchet wheels 22 against the spring 24, and hence, the ratchet wheels 22 are disengaged from the drive pawl 23. Upon disengagement of the drive pawl 23 from the ratchet wheels 22, the operating lever 21 can be further pivoted in a direction conforming to the direction shown by the arrow A in Fig. 10 and, as the operating lever 21 is further pivoted, the cam member 27 integral with the operating lever 21 causes the check pawl 25 to be retracted against the spring 26 thereby to disengage from the ratchet wheels 22, bringing the winding shaft 20 in position to rotate freely. Thereafter, as the strap A is pulled outwardly with respect to the strap winding shaft 20, the end portion V1 of the strap V can be released from the strap winding shaft 20.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. For example, the strap anchor employed in the sixth embodiment of the present invention shown in and described with reference to Figs. 8 to 11 may be of a type shown in any one of Figs. 1 and 2, Fig. 3, Fig. 4, Fig. 5 and Figs. 6 and 8. Conversely, the strap anchor shown in Figs. 8 to 11 may be employed in any one of the first to fifth embodiments of the present invention.

Accordingly, such changes and modifications are, unless they depart from the scope of the present invention as delivered from the claims annexed hereto, to be construed as included therein.

## Claims

1. A strap clasper which comprises:
a generally elongated buckle having first and second end portions opposite to each other and also having a strap receiving mouth defined in the first end portion thereof, said elongated buckle including a pair of spaced longitudinal side walls, spaced a predetermined distance from each other, and a bottom wall;
a strap anchoring means mounted on the first end portion of the elongated buckle so as to straddle between the side walls for holding one of opposite end portions of a strap used to fasten a load;
a strap winding means mounted on the second end portion of the elongated buckle so as to straddle between the side walls for winding the other of the opposite end portions of the strap;
said strap anchoring means including a generally elongated anchoring member mounted on the first end portion of the elongated buckle so as to extend between the side walls and for movement in a direction longitudinally of the elongated buckle, and a strap retaining member mounted on the first end portion of the elongated buckle so as to extend between the side walls and positioned on one side of the anchoring member opposite to the bottom wall, said strap retaining member being operable to clamp a portion of the strap situated between the anchoring member and said strap retaining member when, after the first end portion of the strap has been inserted inwardly of the elongated buckle through the strap receiving mouth and turned around the anchoring member so as to extend backwardly towards the strap receiving mouth, the anchoring member is displaced close towards the strap receiving mouth thereby to clamp a portion of the strap between the bottom wall and the anchoring member.

2. The strap clasper as claimed in Claim 1, wherein portions of said side walls in the first end portion of the elongated buckle have respective longitudinal slots defined therein in alignment with each other, and wherein said strap retaining member is a generally elongated rectangular retainer plate having its opposite end portions slidably received within the longitudinal slots for movement in a direction close towards and away from the strap receiving mouth.

3. The strap clasper as claimed in Claim 1, wherein said strap retaining member is a round retainer pin.

4. The strap clasper as claimed in Claim 3, wherein portions of said side walls in the first end portion of the elongated buckle have respective vertical slots defined therein in alignment with each other for slidably receiving opposite ends of the round retainer pin such that said round retainer pin is movable in a direction generally close towards and away from the anchoring member, and further comprising a releasable locking means carried by at least one of the side walls for movement between lock and release positions, said round retainer pin being held in position close to the anchoring member when the releasable locking means is in the lock position, said round retainer pin being movable away from the anchoring member, when the releasable locking means is in the release position, to allow the first end portion of the strap to be loosened.

5. A strap clasper which comprises:
a generally elongated buckle having first and second end portions opposite to each other and also having a strap receiving mouth defined in the first end portion thereof, said elongated buckle including a pair of spaced longitudinal side walls, spaced a predetermined distance from each other, and a bottom wall;
a strap anchoring means mounted on the first end portion of the elongated buckle so as to straddle between the side walls for holding one of opposite end portions of a strap used to fasten a load;
a strap winding means mounted on the second end portion of the elongated buckle so as to straddle between the side walls for winding the other of the opposite end portions of the strap, said strap winding means including:
a rockable operating lever pivotally supported on the second end portion of the elongated buckle for reciprocate movement in first and second angular directions opposite to each other, said operating lever having a grip defined therein at a location remote from the elongated buckle for the access of an operator's hand thereto;
a winding shaft rotatably mounted on the second end portion of the elongated buckle so as to straddle between the side walls;
a unidirectional rotor means mounted coaxially on the winding shaft for rotation together with the winding shaft in a first direction, but independently of the winding shaft in a second direction opposite to the first direction;
a check member mounted on the elongated buckle and engaged with the unidirectional rotor means for preventing the unidirectional rotor means from being rotated in the second direction, but allowing the rotation of the unidirectional rotor means in the first direction;
a drive member mounted on the operating lever and engaged with the unidirectional rotor means such that, as the operating lever is pivoted in the first angular direction, both of said winding shaft and said unidirectional rotor means are rotated in the first direction to wind up the second end portion of the strap, but, as the operating lever is pivoted in the second angular direction, the operating lever is moved idle while leaving the unidirectional rotor means and the winding shaft substantially immovable;
a release member situated in the vicinity of the grip of the operating lever and operatively associated with the drive member for disengaging the drive member from the unidirectional rotor means when said release member is manipulated; and
a cam means provided in one end of the operating lever adjacent the strap winding means and operable to disengage the check member from the unidirectional rotor means as the operating lever is further pivoted in said first angular direction after the drive member has been disengaged from the unidirectional rotor means as a result of manipulation of the release member.

6. The strap clasper as claimed in Claim 5, wherein said strap anchoring means includes a fixed anchoring member mounted on the first end portion of the elongated buckle so as to straddle between the side walls, and a movable anchoring member mounted on the first end portion of the elongated buckle for movement in a direction close towards and away from the fixed anchoring member while straddling between the side walls, and wherein said one of the opposite end portions of the strap is, after having been inserted inwardly of the elongated buckle through the strap receiving mouth, first turned around the movable anchoring member and then around the fixed anchoring member, said one of the opposite end portions of the strap being further turned around the movable anchoring member and then passed outwardly from the elongated buckle through the strap receiving mouth while forming a strap overlap to resist against a relative movement between these overlapping portions of the strap.

7. The strap clasper as claimed in Claim 5, wherein said unidirectional rotor means comprises at least one ratchet wheel.
